# EUROPEAN PATENT SPECIFICATION

(11) **EP 3 850 398 B1**
(45) Date of publication and mention of the grant of the patent: **24.07.2024**
(21) Application number: 19762876.1
(22) Date of filing: 16.08.2019
(51) Int. Cl.: G01S 17/93, G01S 17/87, G01S 7/481, G02B 26/12, G02B 5/09, G02B 5/10, G01S 17/42

(54) **DETECTION SYSTEM FOR A VEHICLE**
DETEKTIONSSYSTEM FÜR EIN FAHRZEUG
SYSTÈME DE DÉTECTION DESTINÉ À UN VÉHICULE

(30) Priority: 10.09.2018 US 201862728916 P; 21.12.2018 US 201816229478
(43) Date of publication of application: 21.07.2021
(73) Proprietor: Magna Electronics, LLC, Southfield, MI 48034 (US)
(72) Inventor: DE MERSSEMAN, Bernard, Southfield, MI 48034 (US); HANSSON, Peter, Southfield, MI 48034 (US); HALLSTIG, Emil, Southfield, MI 48034 (US); VON HOFSTEN, Olov, Southfield, MI 48034 (US)
(74) Representative: Mewburn Ellis LLP
(86) International application number: PCT/US2019/046800
(87) International publication number: WO 2020/055542

(56) References cited:
- US-A1- 2003 043 363
- US-A1- 2015 009 485

## Description

### FIELD OF THE TECHNOLOGY

The subject disclosure relates to object detection and more particularly to detection systems for vehicles.

### BACKGROUND OF THE TECHNOLOGY

Vehicles often include detection systems which can be used for collision avoidance, self-driving, cruise control, and the like. For an effective detection system, it is important to combine a wide field of view in both the horizontal and vertical direction with long range and high resolution. However, limited space and cost considerations can often limit the range, resolution, and/or accuracy of a detection system.

Subassemblies within the vehicle detection system, such as individual LiDAR systems, can be employed to generate data for the vehicle detection system. Each subassembly typically includes costly components, such as light transmitters and receivers, which are relied upon to generate data related to the location of objects in the surrounding environment. To limit the number of expensive components used, various mechanisms can be employed by the detection system to scan a larger area of the surrounding environment. This can be accomplished by rotating or oscillating parts, such as reflective components, which can be moved to change the field of view of the detection system. Effectively employing mechanisms for scanning can therefore increase the field of view of the detection assembly without the need to include additional expensive LiDAR subassemblies and/or additional transmitters and receivers.

However, all moving components within a detection system must be configured with a high degree of precision to ensure the detection system canvasses the desired field of view. This can be particularly difficult with oscillating components which move in multiple directions, and can require multiple actuators. Further, movement of the components within a detection system must be carefully controlled so that the data generated by the detection system can be accurately matched with the field of view canvassed by the detection system. Therefore, it can be difficult to design a detection system which is inexpensive, simple to control, and effectively canvasses a large and precise field of view.

US 2015/009485 A describes a laser radar system. The laser radar system includes a first transmission and reception unit sequentially radiating a first laser beam to a plurality of locations within a first view range and receiving a reflected light; and a second transmission and reception unit sequentially radiating a second laserbeam to a plurality of locations within a second view range and receiving a reflected light, wherein each of the first transmission and reception unit and the second transmission and reception unit is fixed to a loader and independently searches for the first view range and the second view range.

US 2003/043363 A describes a combined system of a LOAS and a LIDAR system that comprises: a LIDAR arrangement of optical elements for generating a first coherent beam of light at a first predetermined wavelength; a LOAS arrangement of optical elements for generating a second coherent beam of light at a second predetermined wavelength; a dichroic filter optical element for directing the first and second coherent beams of light substantially on a first common optical path towards an aperture of a beam expander; at least one output optical element which directs both of the expanded first and second coherent beams of light from the system, the at least one output optical element also for receiving and directing reflections of the first and second coherent beams of light to the beam expander wherein the beam reflections are collected; and wherein the dichroic filter optical element separates and directs the collected light corresponding to the first coherent beam back to the LIDAR arrangement of optical elements for use in determining flow velocity, and separates and directs the collected light corresponding to the second coherent beam back to the LOAS arrangement of optical elements for use in detecting at least one object.

### SUMMARY OF THE TECHNOLOGY

In light of the needs described above, in at least one aspect, the subject technology relates to a detection system, such as a LiDAR system, which is cost effective and relies on simple movement of mechanical parts to canvass a specific field of view.

According to a first aspect a detection system according to accompanying claim 1 is provided.

In some embodiments, the at least one first light transmitter comprises three first light transmitters and the at least one second light transmitter comprises three second light transmitters. In some cases, each of the first light transmitters is configured to scan substantially a 30 degree section in the elevation direction different than the section scanned by the other first light transmitters. In some cases, each of the second light transmitters is configured to scan substantially a 30 degree section in the elevation direction different than the section scanned by the other second light transmitters. In some embodiments, the first LiDAR system and the second LiDAR system are configured to overlap at angles between -20 degrees and 20 degrees, with respect to an origin, while scanning in the azimuth direction. For example, the first LiDAR system can be configured to scan, with respect to the origin, between -70 degrees and 20 degrees in the azimuth direction. The second LiDAR system can be configured to scan, with respect to the origin, between -20 degrees and 70 degrees in the azimuth direction. The reflective member can be a four sided polygon.

In some cases, the first speed and the second speed can be substantially equal. For example, the first and second speeds can be substantially 10 Hz.

The detection system can include a first optical encoder configured to measure and report a position of the first wedge mirror and a second optical encoder configured to measure and report a position of the second wedge mirror. In some embodiments, the first LiDAR system includes a lens configured to collimate light transmitted between the first LiDAR system and the first wedge mirror. Likewise, the second LiDAR system can include a lens configured to collimate light transmitted between the second LiDAR system and the second wedge mirror. In some embodiments, the at least one first light transmitter and the at least one first light receiver are coaxially aligned and the at least one second light transmitter and the at least one second light receiver are coaxially aligned. The first wedge mirror can be positioned such that the optical path of the first LiDAR system interacts with an area of the first surface offset from a center of the first surface. The second wedge mirror can be positioned such that the optical path of the second LiDAR system interacts with an area of the second surface offset from a center of the second surface.

### BRIEF DESCRIPTION OF THE DRAWINGS

So that those having ordinary skill in the art to which the disclosed system pertains will more readily understand how to make and use the same, reference may be had to the following drawings.
FIG. 1 is a block diagram of a detection system for a vehicle in accordance with the subject technology.
FIG. 2 is an overhead view of a detection system for a vehicle in accordance with the subject technology.
FIG. 3 is a side view of a detection system for a vehicle in accordance with the subject technology.
FIG. 4 is a front top perspective view of a detection system for a vehicle in accordance with the subject technology.
FIG. 5 is a rear top perspective view of a detection system for a vehicle in accordance with the subject technology.
FIG. 6 is a side perspective view of a detection system for a vehicle in accordance with the subject technology.
FIGs. 7A-7E are side perspective views of components of a LiDAR system with wedge mirrors at different rotational positions in accordance with the subject technology.
FIG. 8 is a graph showing an exemplary scan pattern of a detection system in accordance with the subject technology.
FIG. 9 is a graph showing an exemplary scan pattern of a detection system in accordance with the subject technology.

### DETAILED DESCRIPTION

The subject technology overcomes many of the prior art problems associated with vehicle detection systems. In brief summary, the subject technology provides a detection system that allows for simple and easy azimuth and elevation scanning using rotating wedge mirrors and further azimuth scanning using a rotating reflective member. The advantages, and other features of the systems and methods disclosed herein, will become more readily apparent to those having ordinary skill in the art from the following detailed description of certain preferred embodiments taken in conjunction with the drawings which set forth representative embodiments of the present invention. Like reference numerals are used herein to denote like parts. Further, words denoting orientation such as "upper", "lower", "distal", and "proximate" are merely used to help describe the location of components with respect to one another. For example, an "upper" surface of a part is merely meant to describe a surface that is separate from the "lower" surface of that same part. No words denoting orientation are used to describe an absolute orientation (i.e. where an "upper" part must always be on top). Like but separate items described herein often use different suffixes at the end of a shared reference numeral, and are at times referred to collectively by the shared reference numeral (e.g. both LiDAR systems 102a, 102b are referred to as LiDAR systems 102).

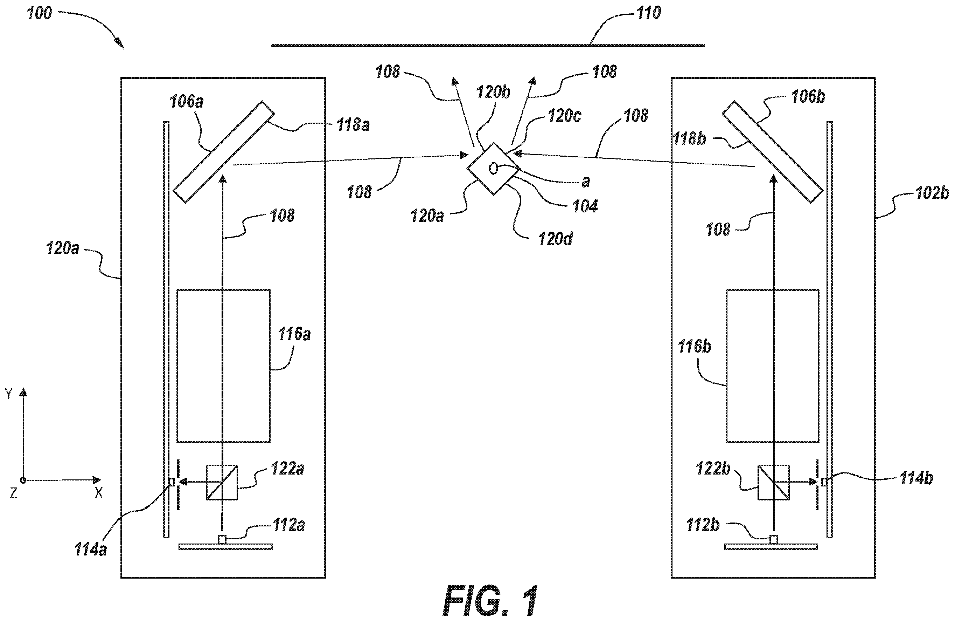

Referring now to FIG. 1, a block diagram of a detection system 100 for a vehicle in an environment in accordance with the subject technology is shown. The detection system 100 includes a first LiDAR system 102a and a second LiDAR system 102b which each interact with a shared reflective member 104. The detection system 100 also includes two wedge mirrors 106a, 106b, each being positioned in the optical path of their respective LiDAR system 102. In general, the detection system 100 transmits and receives light beams 108 through the fascia 110 of a vehicle to obtain range data corresponding to objects in a surrounding environment. While two LiDAR systems 102 interacting with two wedge mirrors 106 are shown by way of example, it should be understood that in some cases, only a single LiDAR system 102 and wedge mirror 106 are used. The single LiDAR system 102 can include, or interact with, a reflective member 104 as shown and described with respect dual LiDAR system detection system 100. Nevertheless, the detection system 100 using two LiDAR systems 102 has been found to be advantageous, as described herein.

Each LiDAR system 102 has at least one light transmitter 112a, 112b and receiver 114a, 114b, a lens 116a, 116b, and a wedge mirror 106a, 106b, as discussed in more detail below. Each transmitter 112 is configured to transmit a light beam 108. The light transmitters 112 can each include a plurality of parallel transmitter elements (referred to collectively as a single light transmitter), such as laser diodes configured to generate pulsed lasers or light beams for reflection off objects within the environment. Other similar known transmitters for a LiDAR system can also be used. Meanwhile, each light receiver 114 is configured to receive the light beams 108 after they have reflected off an object within the environment. The light receivers 114 are optical detection devices, or sensors, as are known for detecting light in LiDAR systems. In some cases, only one light receiver 114 is used in each LiDAR system 102. Alternatively, multiple light receivers 114 can be arranged in a column or array to receive a light beam 108 from a corresponding light transmitter 112 which has reflected off an object in the environment.

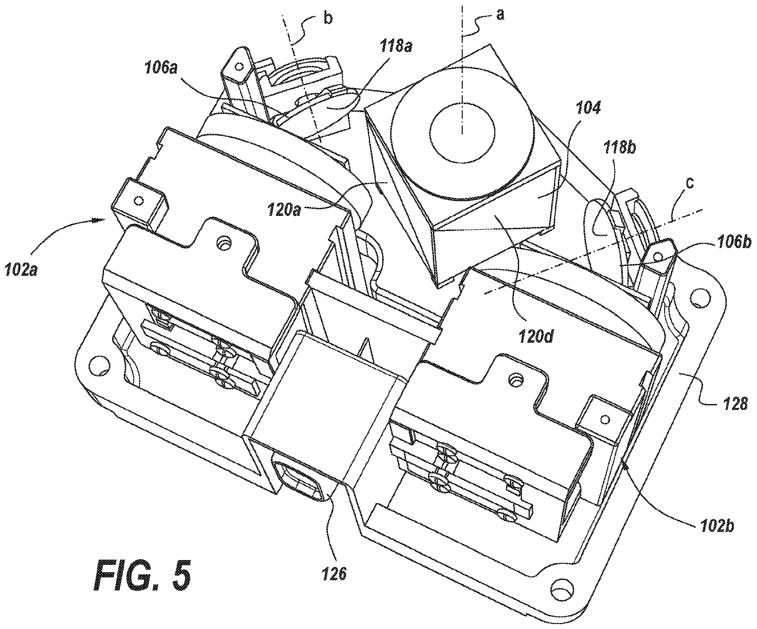

In the example given, the transmitted and received light beams 108 of each LiDAR system 102 travel coaxially through a respective lens 116, the lens 116 being one or more panels of curved glass. That is to say, the detection system 100 is configured such that the transmitters 112 and receivers 114 are coaxially aligned. The lens 116 act to collimate the transmitted and returning light beams 108. The transmitted light beams 108 of each LiDAR system 102 pass through the lens 116, deflect off the corresponding rotating wedge mirror 106, and then deflect off the reflective member 104 and into the environment. To that end, each wedge mirror 106 includes a reflective surface 118a, 118b and the reflective member 104 includes a plurality of reflective sides 120a-120d (e.g. see also FIG. 5). While the exemplary reflective member 104 is a four sided polygon, which has been found to be effective, different numbers of sides, or even different shapes or slopes of the sides or of the reflective member 104 itself can be used as desired. The reflective surfaces 118 and reflective sides 120 can be made from a material that deflects light, such as metal. After deflection off the reflective member 104, the light beams 108 then pass through the fascia 110 into the surrounding environment where they deflect off objects in the environment and return to the detection system 100. The returning light beams 108 are then deflected from the rotating member 104 to the wedge mirror 106 corresponding to one of the LiDAR systems 102, before the returning light beams 108 are received by the receivers 114.

While the transmitters 112 and receivers 114 for each system 102 are offset from one another and facing in different directions, beam splitters 122a, 122b are implemented to allow the transmitters 112 and receivers 114 to operate coaxially. The beam splitters 122 can be one of the many types of known beam splitters, such as wavelength dependent or polarized. Whether the light is deflected or allowed to pass through the beam splitters 122 can be based on a certain property of the light, such as wavelength. In other cases, the beam splitters 122 can simply deflect a portion of all light that hits them while allowing a portion of the light to pass through. As shown, the beam splitters 122 are configured to redirect some light while allowing other light to pass through. This allows the receivers 114 to be arranged to receive returning light beams 108 at an angle perpendicular to the transmission angle of the light transmitters 112 in each LiDAR system 102, even though the an optical path through the lens 116 is shared by transmitted and returning light beams 108. The light beams 108 returned to the light receivers 114 are then converted, by the light receivers 114, into electrical signals. Processing circuitry (not distinctly shown) then processes and stores data related to the objects within the environment based on the electrical signals. In particular, the detection system 100 identifies locations of objects in the environment based on the light beams 108 received by the receivers 114.

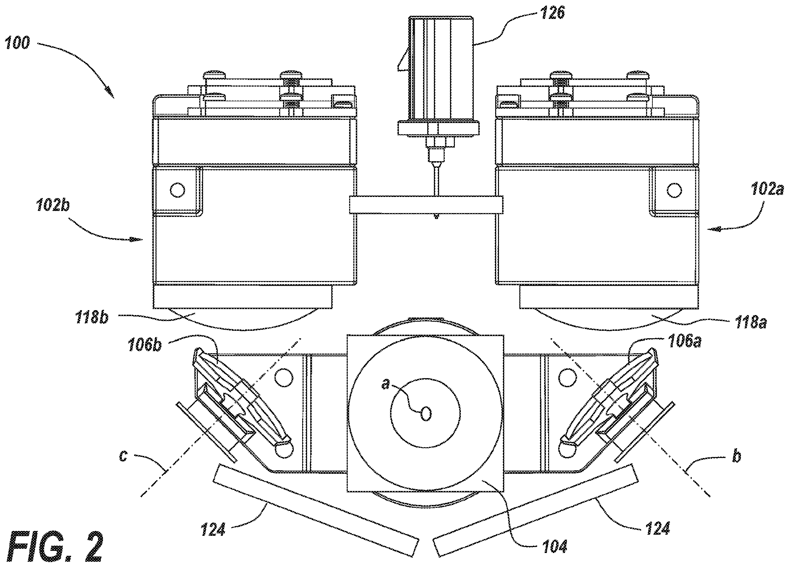

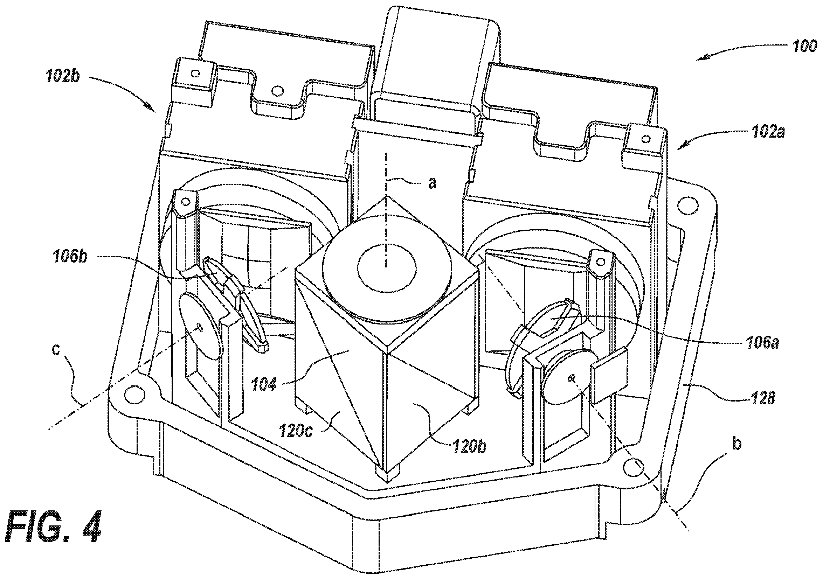

Referring now to FIGs. 1-6, various views of the detection system 100 in accordance with the subject technology are shown (FIG. 1 being in block diagram form). Notably, in order to obtain a wide field of view around the vehicle, scanning the surrounding environment in both azimuth and elevation is desired. In general, rotation of the reflective member 104 causes the detection system 100 to scan in the azimuth direction, while rotation of the wedge mirrors 106 causes the detection system 100 to scan in the elevation and azimuth directions.

More particularly, the reflective member 104 has a plurality of reflective sides 120 that facilitate the interaction between the LiDAR systems 102 and the environment. At a given time while the detection system 100 is operating, each LiDAR system 102 interacts with a different one of the reflective sides 120, described herein as a current active side for that LiDAR system 102. For example, in FIG. 1, light beams 108 from the first LiDAR system 102a are deflecting off reflective side 120b, so reflective side 120b is the first active side for the first LiDAR system 102b. Similarly, reflective side 102c is interacting with the second LiDAR system 102b and is therefore the second active side in the position shown in FIG. 1. An actuator (not distinctly shown) rotates the reflective member 104 around a rotational axis "a". As the reflective member 104 rotates, the angle between the optical path of each LiDAR system 102 (i.e. the path traveled by the respective light beams 108) and the reflective member 104 changes in the azimuth direction. This causes the transmitted light beams 108 from each LiDAR system 102 to sweep in the azimuth direction, generating a large field of view for the detection system 100. As the reflective member 104 rotates further, the active reflective side that each LiDAR system 102 interacts with changes and a new azimuth sweep starts. For example, if the reflective member 104 is rotating clockwise, the reflective member 104 will eventually rotate so that the active reflective side of the first LiDAR system 102a changes from reflective side 120b to reflective side 102a. As the reflective member 104 completes a full 360 degree rotation, every reflective side 120will interact with each LiDAR system 102 at some point (i.e. each reflective side 120 will become the active side for that LiDAR system 102) to scan in the azimuth direction.

At the same time, each LiDAR system 102 has a corresponding wedge mirror 106. The components of each LiDAR system 102 are positioned and configured, as discussed in more detail below, such that rotation of the respective wedge mirror 106 changes the optical path of the corresponding LiDAR system 102 in the elevation and azimuth directions, causing each LiDAR system 102 to scan in the elevation and azimuth directions. Like the reflective member 104, each wedge mirror 106 includes a corresponding actuator (not distinctly shown) which rotates the wedge mirror 106 around an axis during operation of the detection system 100. The first wedge mirror 106a rotates around an axis "b", while the second wedge mirror rotates around an axis "c". The reflective surface 118a of the first wedge mirror 106a is at an angle to a plane orthogonal to axis "b". Said another way, the reflective surface 118a is not perpendicular to the axis "b" around which it rotates. As a result, when the wedge mirror 106a rotates, the wedge mirror 106a deflects light beams 108 between the reflective member 104 and the transmitters 112a and receivers 114aofthe first LiDAR system 102a at different angles, changing the optical path of the first LiDAR system 102a. The components of the first LiDAR system 102a are particularly arranged so this angular change results in scanning in the elevation and azimuth directions. The transmitters 112a are arranged to strike the surface 118a of the first wedge mirror 106a at an area that is offset from the center of the surface 118a, ensuring that rotating of the first wedge mirror 106a
changes the area of the environment scanned by each of the transmitters 112a in the elevation direction and the azimuth direction. The components of the second LiDAR system 102b are similarly arranged as those of the first LiDAR system 102a. To that end, the reflective surface 118b of the second wedge mirror 106b is at an angle to a plane orthogonal to the axis "c" of rotation. As the second wedge mirror 106b rotates, the optical path of the second LiDAR system 102b changes and the second LiDAR system 102b scans in the elevation and azimuth directions.

Two optical encoders (not distinctly shown) can also be provided. The optical encoders can be integrated within, or positioned near the rotating wedge mirrors 106 to measure and report the position of each wedge mirror 106. The position of the wedge mirror 106 can then be relied upon by the detection system 100 to accurately determine positions of objects in the environment based on the detected light beams.

The wedge mirror configuration described above is advantageous, as it allows each LiDAR system 102to scan in the azimuth and elevation directions, and thereby generate a large elevation and azimuth field of view for the detection system, by simply rotating the wedge mirrors 106 around an axis ("b" or "c") at a constant speed. Therefore there is no need for complex moving parts, such as oscillating mirrors that must be pushed and pulled in various directions, potentially by multiple actuators, to scan in the elevation direction. Further, the arrangement shown and describe allows for both LiDAR systems 102 to interact with a single rotating reflective member 104 to scan in the azimuth direction. In this way, the wedge mirrors the detection system 100 gathers data on objects in a large field of view in the azimuth and elevation directions by simple rotation of three separate reflective parts (wedge mirrors 106a, 106b and reflective member 104). Wedge mirrors 106 are particularly good as extending the field of view of the LiDAR system 102 in the elevation direction, and the reflective member 104 is predominately used to extend field of view in the azimuth direction.

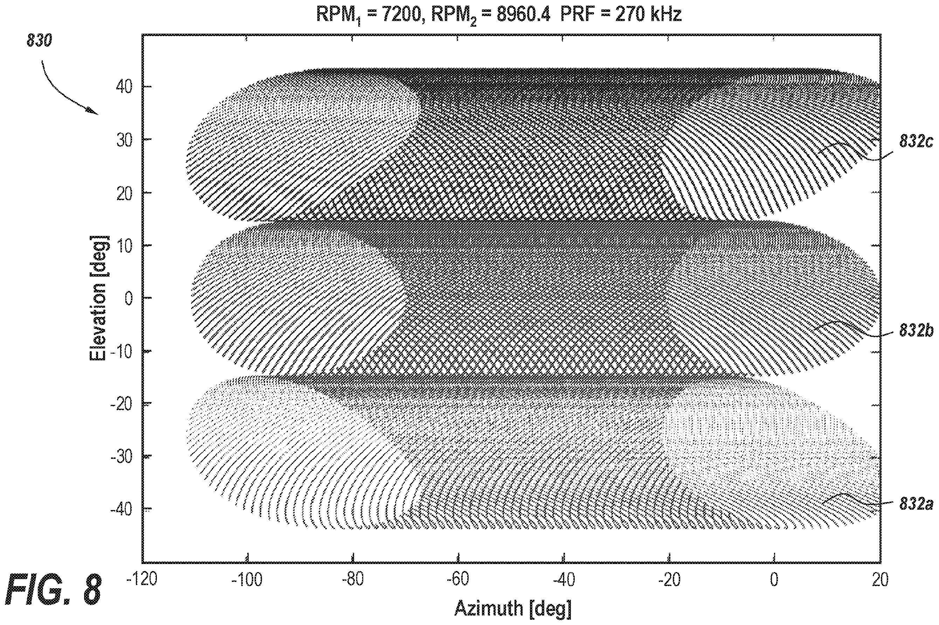

As such, scanning can be accomplished by rotating the wedge mirrors 106 and the reflective member 104, each at a constant speed. In some cases, the two wedge mirrors 106 can be rotated by their respective actuators at different speeds, although it can be advantageous to rotate the two wedge mirrors 106 at the same speed. In some cases, this speed can be substantially 10 Hz (substantially being used herein to denote a variance of +/- 10 percent). The actuator rotating the reflective member 104 causes the reflective member 104 to rotate at a speed faster than the speed of either of the wedge mirrors 106. In some arrangements, these rotation speeds can result in a LiDAR system 102 generating a scan pattern such as the pattern seen in FIG. 8, and discussed in more detail below.

The detection system 100 can also include additional parts that are needed and or beneficial to operating the system 100, and as would be known by one skilled in the art. In some cases, the detection system 100 can be positioned within a protective housing with windows 124 allowing for a field of view to the outside environment. A connector 126 can be included to provide electric power to the detection system 100 and/or to allow for the transmission of data between the detection system 100 and an external system such as the vehicle. At least some components of the detection system 100 can also be rigidly fixed to a support frame 128, to allow the detection system 100 to be mounted within the vehicle.

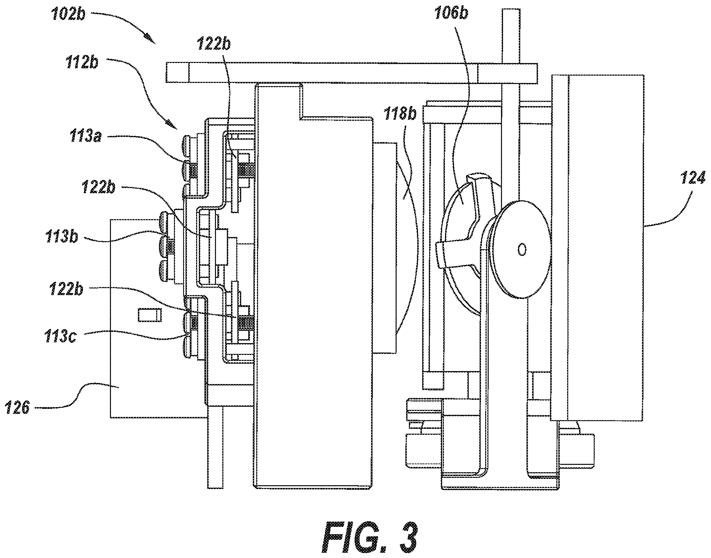

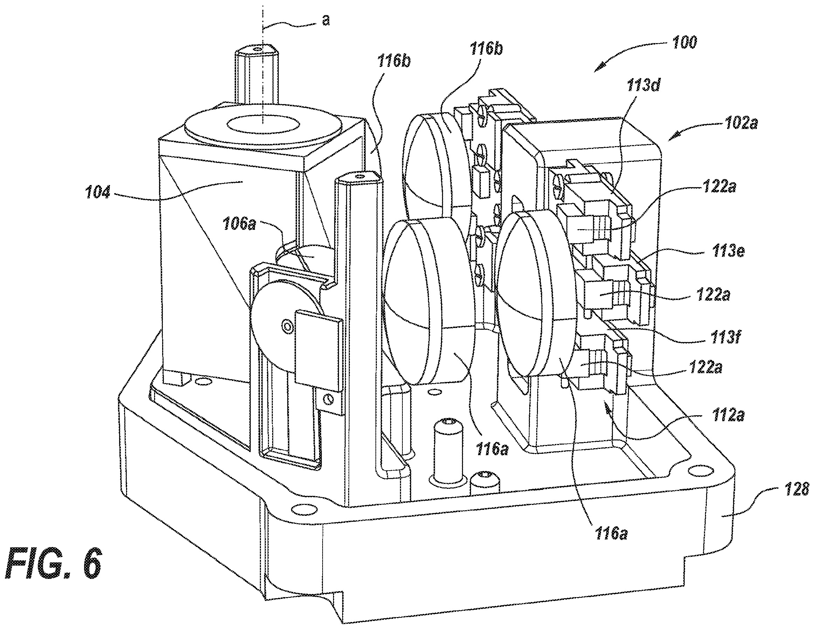

Further, some of the arrangements shown in the figures have been found to be particularly advantageous. For example, as seen in FIG. 3, the LiDAR system 102b can include three separate light transmitters 113a-113c, each light transmitter 113a-113c including an array of individual transmitter elements. Correspondingly, the LiDAR system 102b can include three separate beam splitters 122b, one for each light transmitter 113a-113c. Likewise, as seen in FIG. 6, the LiDAR system 102a can include three separate light transmitters 113d-113f, each with a corresponding beam splitter 122a.

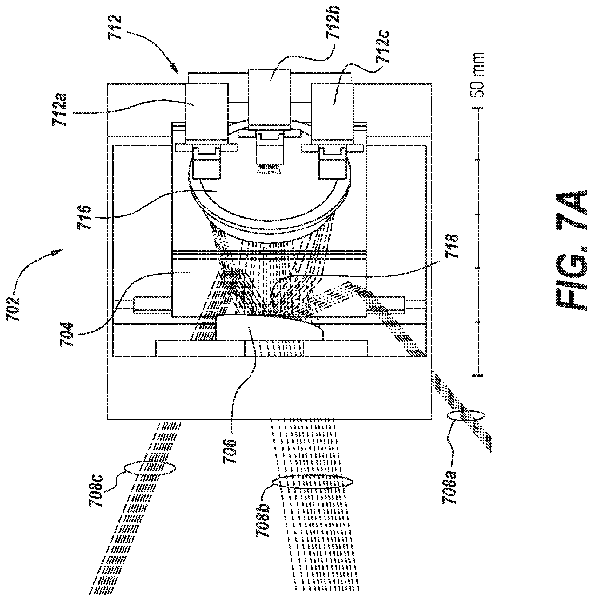

Referring now to FIGs. 7A-7E, side perspective views of components of a LiDAR system 702 are shown with an exemplary wedge mirror 706 in different rotational positions. The exemplary LiDAR system 702 can be configured and arranged similarly to the other LiDAR systems 102 described herein, except as otherwise noted.

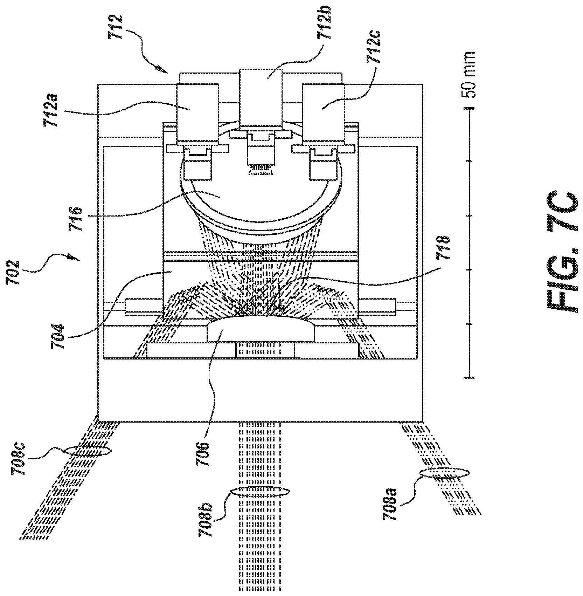

The LiDAR system 702 includes three separate first light transmitters 712a-712c (generally 712) transmitting light beams 708a-708c through a lens 716 and towards a wedge mirror 706. Each light transmitter 712 includes a plurality of light transmitter elements transmitting parallel light beams (not distinctly labeled). Different total numbers of light transmitters 712 can be used in different applications. However, using three light transmitters 712 has been found to be effective in some configurations, as discussed in more detail below. The wedge mirror 706 is positioned within the optical path of the transmitters 712, such that the all light beams 708 from the transmitters 712 deflect off the wedge mirror 706 at an area of the surface 718 of the wedge mirror 706 offset from the center. Intersecting the optical path at a location that is offset from the center of the surface 718 of the mirror 706 ensures that rotation of the mirror 706, which is angled such that it is not perpendicular to the rotational axis of the mirror 706, changes the elevation and azimuth angles of the deflected light beams 708. After deflecting off the wedge mirror 706, the light beams 708 deflect off a reflective member 704 and pass into the environment. In the arrangement shown, after deflection off the reflective member 704, the elevation angle of the light beams 708 differs by substantially 30 degrees from the angle of any adjacent transmitter 712. For example, at a central position, as seen in FIG. 7C, the middle light transmitter 712b transmits light beams 708b substantially parallel to ground (i.e. at an angle of 0 degrees). In that position, the light beam 708a from the first light transmitter 712a is angled in a downward direction substantially 30 degrees with respect to ground and the light beam 708c of third light transmitter 712c is angled in an upward direction substantially 30 degrees. As described in more detail below, the wedge mirror 706 is also angled such that each light transmitter 712 scans a substantially 30 degree section in the elevation direction over the course of 180 degrees of rotation of the wedge mirror 706.

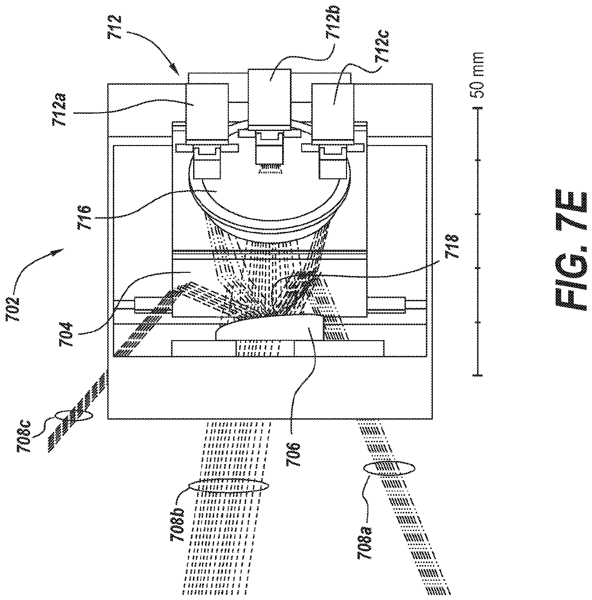

More specifically, FIGs. 7A-7E show a progression of different angles that can be scanned over the course of 180 degrees of rotation of the wedge mirror 706. FIG. 7A depicts the maximum elevation scan in a first direction (e.g. a downward direction) when the wedge mirror 706 has yet to begin rotating. Notably, this position is picked arbitrarily as an origin for ease of explanation, and any position of the wedge mirror 706 could be actually configured as a starting position. In this example, FIG. 7E depicts the maximum elevation scan in a second direction (e.g. an upward direction) when the wedge mirror 706 has completed 180 degrees of rotation. The remaining 180 degrees of rotation, to complete a full 360 degree rotation cycle, would again cover the complete elevation scan range as the angles of the transmitted light beams 708 return from the highest position of FIG. 7E to the lowest position of figure FIG. 7A.

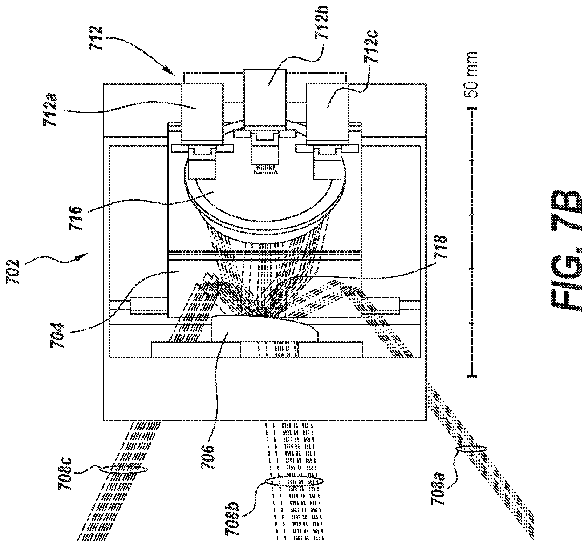

In the example shown, at the lower most position of FIG. 7A, the light beams 708a from the upper light transmitter 712a are angled substantially -45 degrees (i.e. 45 degrees downward). Correspondingly, the light beams 708b from the middle light transmitter 712b are at an angle of substantially 15 degrees downward and the light beams 708c from the lower light transmitter 712c are at an angle of substantially 15 degrees upward. In FIG. 7C, the angle of the light beams 708 has shifted up substantially 15 degrees, such that the light beams 708b from the middle light transmitter 712b are substantially parallel to the ground. Therefore, light beams 708c from the lower light transmitter 712c are angled substantially 30 degrees upward and light beams 708a from the upper light transmitter 712a are angled substantially 30 degrees downward. FIG. 7C, being midway between maximum downward and upward elevation scan positions at 0 and 180 degrees of rotation of the wedge mirror 706, represents a position where the wedge mirror 706 has rotated approximately 90 degrees. FIG. 7B shows an interim position of rotation between FIG. 7A and FIG. 7C.

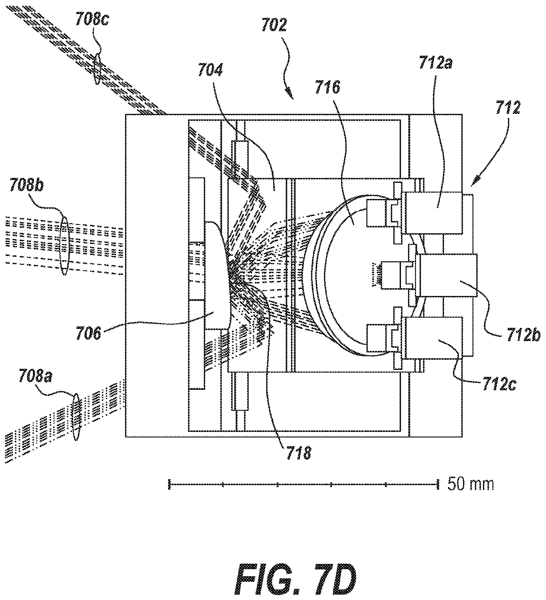

In FIG. 7E, the wedge mirror 706 has completed 180 degrees of rotation and the light beams 708 have reached a maximum elevation scan in the upwards direction. FIG. 7D shows a rotational position of the wedge mirror 706 between FIG. 7C and FIG. 7E. At the position shown in FIG. 7E, the light beams 708c of the lower light transmitter 712c deflect off the wedge mirror 706 at an angle of substantially 45 degrees to ground. The light beams 708b, 708a of the middle and upper light transmitters 712b, 712a are at an angle of substantially 15 and -15 degrees, respectively. Therefore, over the course of 180 degrees of rotation of the wedge mirror, the light beams 708a from the upper light transmitter 712a scan an elevation section within an angle of substantially -45 degrees to -15 degrees. The light beams 708b from the middle light transmitter 712b scan an elevation section within a range of angles of substantially -15 degrees to 15 degrees. The light beams 708c scan an elevation section within an angle of substantially 15 degrees to 45 degrees. As a result, a substantially 90 degree section is scanned in elevation (-45 degrees to 45 degrees) as the wedge mirror 706 rotates and there is little to no overlap between the elevation area scanned by each of the light transmitters 712.

Referring now to FIG. 8, an exemplary graph 830 showing the scan pattern for one LiDAR system in accordance with the subject technology is shown. The elevation area scanned is represented by the y-axis of the graph 830 while the azimuth area scanned is represented by the x-axis of the graph 830. The graphical lines 832a, 832b, 832c show area scanned by three separate light transmitters, such as the light transmitters 712a, 712b, 712c, respectively, as a wedge mirror and reflective member are rotated to scan in the azimuth and elevation directions.

As with the LiDAR system of FIGs. 7A-7E, the graphical lines 832 for the light transmitters show that elevation angles between -45 degrees and 45 degrees are covered as the detection system scans. In particular, the graph line 832c shows that the lower light transmitter 712c scans the elevation section substantially between 45 and 15 degrees. The graph line 832b for the middle light transmitter 712b shows a scan of an elevation section substantially between 15 and -15 degrees. The graph line 832a shows that the upper light transmitter 712a scans the elevation section between -15 and -45 degrees.

In the arrangement shown, the azimuth scan pattern is exemplary of a LiDAR system positioned to cover the leftmost side of the vehicle (assuming the origin of 0 degrees is directly in front of the vehicle). Therefore the azimuth scan pattern shown in FIG. 8 depicts a LiDAR system similar to the first LiDAR system 102a shown in FIG. 1. The graph lines 832 of the light transmitters 712 therefore show coverage substantially between -110 degrees and 20 degrees in the azimuth direction. Notably, at the outermost areas of the azimuth scan, the resolution is poor. This is more of a concern directly in front of the vehicle (i.e. around the origin of 0 degrees azimuth) than to the sides of the vehicle (i.e. near -110 degree in the azimuth direction). To help ensure the vehicle detection system has sufficient data directly in front of the vehicle, the right most LiDAR system (e.g. the second LiDAR system 102b in FIG. 1) can be positioned to overlap around the azimuth origin point of 0 degrees. For example, although not shown in FIG. 8, a rightmost LiDAR system could be positioned to scan between -20 and 110 degrees in the azimuth direction, causing an overlap with the left LiDAR system of substantially 40 degrees between -20 and 20 degrees in the azimuth direction

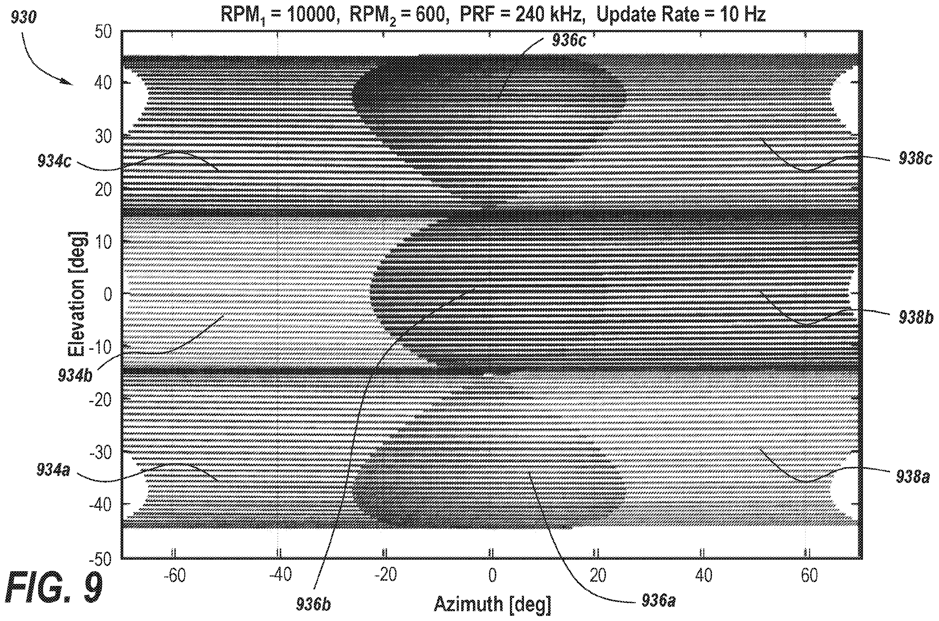

Referring now to FIG. 9, an exemplary graph 930 showing the scan pattern generated by an exemplary detection system is shown. As with the graph 830, on the graph 930 the elevation area scanned is represented by the y-axis while the azimuth area scanned is represented by the x-axis of the graph 930. Directly in front of the vehicle horizontally is represented at an origin point of 0 degrees in the azimuth direction, while 0 degrees in the elevation direction represents the elevation of the detection system. The detection system generating the scan pattern of graph 930 can be, for example, a detection system configured as shown and described with respect to detection system 100 of FIGs. 1-6. As such, the detection system that generates the can pattern of graph 930 can include two separate LiDAR systems, each having three separate light transmitters. The light transmitters of the leftmost LiDAR system (e.g. the LiDAR system positioned to scan left of the vehicle) are depicted by the graph lines 934a, 934b, 934c. Each light transmitter includes a number of individual transmission elements each sensing out a light beam. Likewise, the light transmitters of the rightmost LiDAR system are depicted by graph lines 936a, 936b, 936c. These graph lines 934, 936 show the area scanned by the detection system as the wedge mirrors and reflective member are rotated to scan in the azimuth and elevation directions.

In the arrangement shown, the graph lines 934 show that the leftmost LiDAR system covers the azimuth field of view substantially between -70 degrees and 20 degrees in the azimuth direction. Conversely, the rightmost LiDAR system covers the azimuth field of view substantially between -20 degrees and 70 degrees in the azimuth direction. Therefore the LiDAR systems overlap at an area around the vehicle origin point in the azimuth direction. In the example shown, the light transmitters overlap at angles between -20 and 20 degrees, with respect to the origin, while scanning in azimuth direction. More particularly, the lower graph lines 934a, 938a show that the lower light transmitters overlap at the area labeled 936a. The middle graph lines 934b, 938b show that the middle light transmitters overlap at the area labeled 936b. The upper graph lines 934c, 938c show that the upper light transmitters overlap at the area labeled 936c. With respect to elevation, the lower light transmitters scan substantially 30 degrees in a lower area of elevation (graph lines 934a, 938a, between -15 and -45 degrees), the middle light transmitters scan substantially 30 degrees in a middle area of elevation (graph lines 934b, 938b, between -15 and 15 degrees), and the upper light transmitters scan substantially 30 degrees in an upper area of elevation (graph lines 934c, 938c, between 15 and 45 degrees). There is little to only slight overlap in elevation between the transmitters. This scan pattern (and thus, the corresponding detection system configuration) has been found to provide an effective detection system range, good overall resolution, and better resolution in the areas of most importance. Further, a limited number of components and/or complicated parts are required, which carries the advantages of low cost, low power consumption, and reliability.

While the invention has been described with respect to preferred embodiments, those skilled in the art will readily appreciate that various changes and/or modifications can be made without departing from the scope of the accompanying claims. For example, each claim may depend from any or all claims in a multiple dependent manner even though such has not been originally claimed.

## Claims

1. A detection system (100) for a vehicle in an environment, comprising:
a reflective member (104) configured to rotate about a first axis, the reflective member (104) having a plurality of reflective sides;
a first LiDAR system (102a) including at least one first light transmitter and at least one first light receiver;
a second LiDAR system (102b) including at least one second light transmitter and at least one second light receiver;
a first wedge mirror (106a): configured to rotate about a second axis, the first wedge mirror (106a) having a first surface at an angle to a plane orthogonal to the second axis and the first surface not being perpendicular to the second axis; and positioned such that the first surface is configured to deflect light from the first LiDAR system (102a) to a first active side of the reflective sides of the reflective member (104), the first wedge mirror (106a) further positioned such that the optical path of the first LiDAR system interacts with an area of the first surface offset from a center of the first surface such that an optical path of the first LiDAR system (102a) interacts with an area of the first surface such that rotation of the first wedge mirror (106a) changes a field of view of the first LiDAR system (102a) in an elevation direction and in an azimuth direction; and
a second wedge mirror (106b): configured to rotate about a third axis, the second wedge mirror (106a) having a second surface at an angle to a plane orthogonal to the third axis and the second surface not being perpendicular to the third axis; and
positioned such that the second surface is configured to deflect light from the second LiDAR system (102b) to a second, different from the first, active side of the reflective sides of the
reflective member (104), the second wedge mirror (106a) further positioned such that the optical path of the second LiDAR system (102b) interacts with an area of the second surface offset from a center of the second surface such that an optical path of the second LiDAR system (102b) interacts with an area of the second surface such that rotation of the second wedge mirror (106a) changes a field of view of the second LiDAR system (102b) in the elevation direction and in the azimuth direction,
wherein, the reflective member (104) is positioned such that rotation of the reflective member changes the field of view of the first and second LiDAR systems (102a, b) in the azimuth direction, wherein the system includes a first actuator configured to rotate the first wedge mirror (106a) at a first speed;
a second actuator configured to rotate the second wedge mirror (106a) at a second speed;
and
a third actuator configured to rotate the reflective member (104) at a third speed, wherein the third speed is faster than the first speed and the third speed is faster than the second speed.

2. The detection system of Claim 1, wherein:
the at least one first light transmitter comprises three first light transmitters; and
the at least one second light transmitter comprises three second light transmitters.

3. The detection system of Claim 2, wherein:
each of the first light transmitters is configured to scan substantially a 30 degree section in the elevation direction different than the section scanned by the other first light transmitters; and each of the second light transmitters is configured to scan substantially a 30 degree section in the elevation direction different than the section scanned by the other second light transmitters.

4. The detection system of Claim 3, wherein the first LiDAR system (102a) and the second LiDAR system (102b) are configured to overlap at angles between -20 degrees and 20 degrees, with respect to an origin, while scanning in the azimuth direction.

5. The detection system of Claim 4, wherein:
the first LiDAR system (102a) is configured to scan, with respect to the origin, between - 70 degrees and 20 degrees in the azimuth direction; and the second LiDAR system (102b) is configured to scan, with respect to the origin, between - 20 degrees and 70 degrees in the azimuth direction.

6. The detection system of Claim 1, wherein the reflective member (104) is a four sided polygon.

7. The detection system of Claim 1, wherein the first speed and the second speed are equal.

8. The detection system of Claim 7, wherein the first and second speeds are substantially 10Hz, wherein substantially denotes a variance of +/- 10 percent.

9. The detection system of Claim 1, further comprising:
a first optical encoder configured to measure and report a position of the first wedge mirror (106a); and
a second optical encoder configured to measure and report a position of the second wedge mirror (106b).

10. The detection system of Claim 1, wherein the first LiDAR system (102a) includes a lens configured to collimate light transmitted between the first LiDAR system (102a) and the first wedge mirror (106a); and
the second LiDAR system (102b) includes a lens configured to collimate light transmitted between the second LiDAR system (102b) and the second wedge mirror (106b).

11. The detection system of Claim 1, wherein the at least one first light transmitter and
the at least one first light receiver are coaxially aligned; and
the at least one second light transmitter and the at least one second light receiver are coaxially aligned.

## Patentansprüche

1. Detektionssystem (100) für ein Fahrzeug in einer Umgebung, umfassend:
ein reflektierendes Element (104), das ausgelegt ist, um um eine erste Achse zu rotieren, wobei das reflektierende Element (104) eine Vielzahl von reflektierenden Seiten aufweist;
ein erstes LiDAR-System (102a), einschließlich zumindest eines ersten Lichtsenders und zumindest eines ersten Lichtempfängers;
ein zweites LiDAR-System (102b), einschließlich zumindest eines zweiten Lichtsenders und zumindest eines zweiten Lichtempfängers;
einen ersten Keilspiegel (106a), der ausgelegt ist, um um eine zweite Achse zu rotieren, wobei der erste Keilspiegel (106a) eine erste Oberfläche in einem Winkel zu einer Ebene orthogonal zur zweiten Achse aufweist, und wobei die erste Oberfläche nicht normal auf die zweite Achse steht; und der derart angeordnet ist, dass die erste Oberfläche ausgelegt ist, um Licht aus dem ersten LiDAR-System (102a) zu einer ersten aktiven Seite der reflektierenden Seiten des reflektierenden Elements (104) abzulenken, wobei der erste Keilspiegel (106a) ferner derart angeordnet ist, dass der optische Pfad des ersten LiDAR-Systems mit einer Fläche der ersten Oberfläche wechselwirkt, die von einem Mittelpunkt der ersten Oberfläche derartig versetzt ist, dass ein optischer Pfad des ersten LiDAR-Systems (102a) mit einer Fläche der ersten Oberfläche wechselwirkt, sodass die Rotation des ersten Keilspiegels (106a) ein Sichtfeld des ersten LiDAR-Systems (102a) in einer Elevationsrichtung und in einer Azimutalrichtung ändert; und
einen zweiten Keilspiegel (106b), der ausgelegt ist, um um eine dritte Achse zu rotieren, wobei der zweite Keilspiegel (106a) eine zweite Oberfläche in einem Winkel zu einer Ebene orthogonal zur dritten Achse aufweist, und wobei die zweite Oberfläche nicht normal auf die dritte Achse steht; und der derart angeordnet ist, dass die zweite Oberfläche ausgelegt ist, um Licht aus dem zweiten LiDAR-System (102b) zu einer zweiten aktiven Seite der reflektierenden Seiten des reflektierenden Elements (104) abzulenken, die sich von der ersten aktiven Seite unterscheidet, wobei der zweite Keilspiegel (106a) ferner derart angeordnet ist, dass der optische Pfad des zweiten LiDAR-Systems (102b) mit einer Fläche der zweiten Oberfläche wechselwirkt, die von einem Mittelpunkt der zweiten Oberfläche derartig versetzt ist, dass ein optischer Pfad des zweiten LiDAR-Systems (102b) mit einer Fläche der zweiten Oberfläche derart wechselwirkt, dass die Rotation des zweiten Keilspiegels (106a) ein Sichtfeld des zweiten LiDAR-Systems (102b) in der Elevationsrichtung und in der Azimutalrichtung ändert,
wobei das reflektierende Element (104) derart angeordnet ist, dass die Rotation des reflektierenden Elements das Sichtfeld des ersten und des zweiten LiDAR-Systems (102a, b) in die Azimutalrichtung ändert, wobei das System ein erstes Aktuatorelement umfasst, das ausgelegt ist, um den ersten Keilspiegel (106a) mit einer ersten Geschwindigkeit zu rotieren;
wobei ein zweites Aktuatorelement ausgelegt ist, um den zweiten Keilspiegel (106a) mit einer zweiten Geschwindigkeit zu rotieren; und
wobei ein drittes Aktuatorelement ausgelegt ist, um das reflektierende Element (104) mit einer dritten Geschwindigkeit zu rotieren, wobei die dritte Geschwindigkeit schneller ist als die erste Geschwindigkeit und die dritte Geschwindigkeit schneller ist als die zweite Geschwindigkeit.

2. Detektionssystem nach Anspruch 1, wobei:
der zumindest eine erste Lichtsender drei erste Lichtsender umfasst; und der zumindest eine zweite Lichtsender drei zweite Lichtsender umfasst.

3. Detektionssystem nach Anspruch 2, wobei:
jeder der ersten Lichtsender ausgelegt ist, um im Wesentlichen einen 30°-Abschnitt in der Elevationsrichtung zu überstreichen, der sich von dem Abschnitt, der von den anderen ersten Lichtsendern überstrichen wird, unterscheidet; und wobei jeder der zweiten Lichtsender ausgelegt ist, um im Wesentlichen einen 30°-Abschnitt in der Elevationsrichtung zu überstreichen, der sich von dem Abschnitt unterscheidet, der von den anderen zweiten Lichtsendern überstrichen wird.

4. Detektionssystem nach Anspruch 3, wobei das erste LiDAR-System (102a) und das zweite LiDAR-System (102b) ausgelegt sind, um sich an Winkeln zwischen -20° und 20° in Bezug auf einen Ursprung während des Scannens in der Azimutal-Richtung zu überlagern.

5. Detektionssystem nach Anspruch 4, wobei:
das erste LiDAR-System (102a) ausgelegt ist, um in Bezug auf den Ursprung zwischen -70° und 20° in die Azimutal-Richtung zu überstreichen; und wobei das zweite LiDAR-System (102b) ausgelegt ist, um in Bezug auf den Ursprung zwischen -20° und 70° in der Azimutal-Richtung zu überstreichen.

6. Detektionssystem nach Anspruch 1, wobei das reflektierende Element (104) ein vierseitiges Polygon ist.

7. Detektionssystem nach Anspruch 1, wobei die erste Geschwindigkeit und die zweite Geschwindigkeit gleich sind.

8. Detektionssystem nach Anspruch 7, wobei die erste und die zweite Geschwindigkeit im Wesentlichen 10 Hz betragen, wobei "im Wesentlichen" eine Abweichung von +/- 10 % bezeichnet.

9. Detektionssystem nach Anspruch 1, das ferner Folgendes umfasst:
einen ersten optischen Kodierer, der ausgelegt ist, um eine Position des ersten Keilspiegels (106a) zu messen und zu berichten; und
einen zweiten optischen Kodierer, der ausgelegt ist, um eine Position des zweiten Keilspiegels (106b) zu messen und zu berichten.

10. Detektionssystem nach Anspruch 1, wobei das erste LiDAR-System (102a) eine Linse umfasst, die ausgelegt ist, um Licht, das zwischen dem ersten LiDAR-System (102a) und dem ersten Keilspiegel (106a) übertragen wird, zu kollimieren; und
wobei das zweite LiDAR-System (102b) eine Linse umfasst, die ausgelegt ist, um Licht, das zwischen dem zweiten LiDAR-System (102b) und dem zweiten Keilspiegel (106b) übertragen wird, zu kollimieren.

11. Detektionssystem nach Anspruch 1, wobei der zumindest eine erste Lichtsender und der zumindest eine erste Lichtempfänger koaxial ausgerichtet sind; und
wobei der zumindest eine zweite Lichtsender und der zumindest eine zweite Lichtempfänger koaxial ausgerichtet sind.

## Revendications

1. Système de détection (100) pour un véhicule dans un environnement, comprenant :
un élément réfléchissant (104) conçu pour tourner autour d'un premier axe, l'élément réfléchissant (104) présentant une pluralité de côtés réfléchissants ;
un premier système LiDAR (102a) comprenant au moins un premier émetteur de lumière et au moins un premier récepteur de lumière ;
un second système LiDAR (102b) comprenant au moins un second émetteur de lumière et au moins un second récepteur de lumière ;
un premier miroir de coin (106a) : configuré pour tourner autour d'un deuxième axe, le premier miroir de coin (106a) ayant une première surface formant un angle avec un plan orthogonal au deuxième axe et la première surface n'étant pas perpendiculaire au deuxième axe ; et positionné de telle sorte que la première surface est configurée pour dévier de la lumière du premier système LiDAR (102a) vers un premier côté actif des côtés réfléchissants de l'élément réfléchissant (104), le premier miroir de coin (106a) étant en outre positionné de telle sorte que le trajet optique du premier système LiDAR interagit avec une zone de la première surface décalée par rapport à un centre de la première surface de telle sorte qu'un trajet optique du premier système LiDAR (102a) interagit avec une zone de la première surface de telle sorte qu'une rotation du premier miroir de coin (106a) change un champ de vision du premier système LiDAR (102a) dans une direction d'élévation et dans une direction d'azimut ; et
un second miroir de coin (106b) : configuré pour tourner autour d'un troisième axe, le second miroir de coin (106a) ayant une seconde surface formant un angle par rapport à un plan orthogonal au troisième axe et la seconde surface n'étant pas perpendiculaire au troisième axe ; et positionné de telle sorte que la seconde surface est configurée pour dévier de la lumière du second système LiDAR (102b) vers un second côté différent du premier côté actif des côtés réfléchissants de l'élément réfléchissant (104), le second miroir de coin (106a) étant en outre positionné de telle sorte que le trajet optique du second système LiDAR (102b) interagit avec une zone de la seconde surface décalée par rapport à un centre de la seconde surface de telle sorte qu'un trajet optique du second système LiDAR (102b) interagit avec une zone de la seconde surface de telle sorte qu'une rotation du second miroir de coin (106a) change un champ de vision du second système LiDAR (102b) dans la direction d'élévation et dans la direction d'azimut,
dans lequel l'élément réfléchissant (104) est positionné de telle sorte qu'une rotation de l'élément réfléchissant modifie le champ de vision des premier et second systèmes LiDAR (102a, b) dans la direction d'azimut, dans lequel le système comprend un premier actionneur configuré pour faire tourner le premier miroir de coin (106a) à une première vitesse ;
un deuxième actionneur configuré pour faire tourner le second miroir de coin (106a) à une deuxième vitesse ;
et
un troisième actionneur configuré pour faire tourner l'élément réfléchissant (104) à une troisième vitesse, dans lequel la troisième vitesse est plus rapide que la première vitesse et la troisième vitesse est plus rapide que la deuxième vitesse.

2. Système de détection selon la revendication 1, dans lequel :
le au moins un premier émetteur de lumière comprend trois premiers émetteurs de lumière ; et
le au moins un second émetteur de lumière comprend trois seconds émetteurs de lumière.

3. Système de détection selon la revendication 2, dans lequel :
chacun des premiers émetteurs de lumière est configuré pour balayer sensiblement une section de 30 degrés dans une direction d'élévation différente de la section balayée par les autres premiers émetteurs de lumière ; et chacun des seconds émetteurs de lumière est configuré pour balayer sensiblement une section de 30 degrés dans la direction d'élévation différente de la section balayée par les autres seconds émetteurs de lumière.

4. Système de détection selon la revendication 3, dans lequel le premier système LiDAR (102a) et le second système LiDAR (102b) sont configurés pour se chevaucher à des angles compris entre -20 degrés et 20 degrés, par rapport à une origine, tout en balayant dans la direction d'azimut.

5. Système de détection selon la revendication 4, dans lequel :
le premier système LiDAR(102a) est configuré pour balayer, par rapport à l'origine, entre -70 degrés et 20 degrés dans la direction de l'azimut ; et le second système LiDAR (102b) est configuré pour balayer, par rapport à l'origine, entre -20 degrés et 70 degrés dans la direction d'azimut.

6. Système de détection selon la revendication 1, dans lequel l'élément réfléchissant (104) est un polygone à quatre côtés.

7. Système de détection selon la revendication 1, dans lequel la première vitesse et la deuxième vitesse sont égales.

8. Système de détection selon la revendication 7, dans lequel les première et deuxième vitesses sont sensiblement de 10 Hz, dans lequel sensiblement désigne une variance de +/- 10 pour cent.

9. Système de détection selon la revendication 1, comprenant en outre :
un premier codeur optique configuré pour mesurer et rapporter une position du premier miroir de coin (106a) ; et
un second codeur optique configuré pour mesurer et rapporter une position du second miroir de coin (106b).

10. Système de détection selon la revendication 1, dans lequel le premier système LiDAR (102a) comprend une lentille configurée pour collimater de la lumière transmise entre le premier système LiDAR (102a) et le premier miroir de coin (106a) ; et le second système LiDAR (102b) comprend une lentille configurée pour collimater de la lumière transmise entre le second système LiDAR (102b) et le second miroir de coin (106b).

11. Système de détection selon la revendication 1, dans lequel le au moins un premier émetteur de lumière et le au moins un premier récepteur de lumière sont alignés coaxialement ; et
le au moins un second émetteur de lumière et le au moins un second récepteur de lumière sont alignés coaxialement.
